# EUROPEAN PATENT SPECIFICATION

(11) **EP 1 540 172 B1**
(45) Date of publication and mention of the grant of the patent: **18.01.2006**
(21) Application number: 03794361.0
(22) Date of filing: 02.09.2003
(51) Int. Cl.: F03B 13/26, E02B 9/08

(54) **APPARATUS WITH AN INCLINED CARRYING PILLAR FOR ANCHORING AN AXIAL TURBINE FOR THE PRODUCTION OF ELECTRIC ENERGY FROM WATER CURRENTS**
VORRICHTUNG MIT EINEM GENEIGTEN TRAGEPFEILER ZUR VERANKERUNG EINER AXIALTURBINE FÜR DIE ERZEUGUNG VON ELEKTRISCHEM STROM AUF DER GRUNDLAGE VON WASSERSTRÖMUNGEN
SOCLE INCLINE POUR UNE TURBINE HYDRAULIQUE

(30) Priority: 04.09.2002 NO 20024219
(43) Date of publication of application: 15.06.2005
(73) Proprietor: Hammerfest Ström AS, 9613 Hammerfest (NO)
(72) Inventor: ARNESEN, Frode, N-1395 Hvalstad (NO); JOHANSEN, Harald, N-9600 Hammerfest (NO)
(74) Representative: Hall, Matthew Benjamin
(86) International application number: PCT/NO2003/000306
(87) International publication number: WO 2004/022968

(56) References cited:
- DE-A1- 10 021 649
- DE-A1- 10 134 509
- GB-A- 2 348 249
- US-A- 2 501 696
- US-A- 5 798 572

## Description

Apparatus with an inclined carrying pillar for anchoring an axial turbine for the production of electric energy from water currents.

The present invention concerns a foundation with an inclined carrying pillar for an axial turbine for the production of electric energy from currents in bodies of water.

The foundation with the inclined carrying pillar creates an increased distance between the turbine blades of the axial turbine and the carrying pillar, and thereby reduces the dynamical forces that occur each time a turbine blade passes in the shadow of the carrying structure. The foundation is particularly adapted for being placed on a seabed for exploiting tidal currents.

Research and development relating to tidal power stations or plants for the production of electric energy has been going on for many decades. One of the advantages with tidal power plants is for instance that they, in the relation to windmills, are predictable and to a small degree dependent on the weather. Nevertheless, very few plants are built in spite of that it, on a world basis, is enormous energy resources in tidal currents. The cause is probably of an economical and - or environmental kind. These and other reasons have resulted in the development of plants that are completely placed below the ocean surface. These plants are built from modules placed on a foundation at the ocean bed.

However it is a challenge to install a rigid foundation below the ocean surface in an economical way, because the conditions at the seabed can be difficult and varying, and because the modules that are to be founded may have considerable dimensions. The foundations must necessarily be placed in flowing bodies of water, and in some cases be installed relatively deep. The foundations are exposed to considerable mechanical loads from the flowing bodies of water and from the turbine they are meant to carry. These loads can be fluctuating and create natural oscillations in the structure. The foundations must be able to be installed quickly because the work with the installations in many cases must be performed during the change of tide to avoid the current in the area being too strong to prevent installation.

It has previously been developed little technology within this field because plants for the production of energy from flowing bodies of water, placed on a foundation, and that are completely placed below the surface of the water, not has been widespread, and are of a newer date.

An example of such a tidal plant built of modules is described in patent application NO 2001 0737, Hammerfest Strøm. This plant includes a foundation intended to be placed at the seabed, and one or more modules placed at the foundation. The modules may include a turbine, a generator for electric current, a transmission and various electrical components. These turbines are secured to a foundation that may include pillars or columns.

Bodies of water flowing around constructions of this type easily create natural oscillations in the structure as mentioned. This in turn imposes considerable requirements to the foundation. Structures that do not extend above the surface are favourable to reduce disturbances and retardation of the water current. Retardation and disturbances affects the turbine in an unfavourable way.

In relation to axial turbines or propeller turbines secured to a carrying structure at a fixed angle in relation to the surroundings, and where the blades or wings have an adjustable pitch and can be rotated at least 180° in connection with a change of tide, or direction of current, it is a problem that a carrying structure will create a "shadow" for the turbine in one of the directions of the flow and create disturbances in the flowing bodies of water. This is particularly pronounced when a carrying structure lies nearby the turbine. In such cases it emerges dynamical effects because it is created an unbalance between the various turbine blades or turbine wings of the turbine. The turbine blades that not passes the structure and thereby not goes through the "shadow" of the structure where the flowing bodies of water are retarded and disturbed by the structure, maintains their effect or driving forces, including the axial forces. The turbine blade that passes the "shadow" however looses its driving forces, including the axial forces. This results in a bending moment about the turbine shaft. This again creates dynamical effects that propagates through the entire structure and that are cost intensive because the structure must be dimensioned to prevent fatigue fractures. It can also emerge unnecessary large loads on the turbine itself. It is particularly the outer part towards the tip of the turbine blades that contribute to this effect. The problem is considerably less at the root of the blades.

Vertical components can also disturb a vertically placed turbine to a large extent, because the disturbance affects the entire length of a turbine blade at the same time, and generates accordingly a considerably more pronounced or sudden load and influence on the turbine in relation to if the disturbance had been distributed on various parts along the length of the blade during one revolution.

A condition for the turbine blade to operate effectively, is that it is correctly adjusted in relation to the direction and velocity of the medium that acts on it. Flowing water impinging a carrying structure will change its character both in terms of direction and velocity. When a turbine blade placed down flow in relation to the carrying structure passes through the "shadow" of the carrying structure, the turbine blade will loose large parts of the torque and the axial forces acting on the blade. This introduces dynamical forces that are extremely unfavourable because the turbine wings, and all the elements taking up forces from the turbine wings, must be dimensioned for higher loads and for unfavourable fatigue conditions. Increased requirements for dimensioning will have a considerable effect on the building costs. Additionally, one will if the turbine is connected to an electric generator, an unfavourable "fluctuation" in the electricity production. The problem is well known for instance from the wind turbine industry.

A water turbine apparatus having the technical features defined in the pre-characterizing portion of claim 1 is e.g. known from document GB 2 348 249 A.

Accordingly the present invention concerns a carrying structure or a carrying foundation that substantially reduces the negative effects described above. Furthermore it is provided an inclined structure that can be founded on a simple and cost effective way with varying seabed conditions, and that simplifies maintenance and exchange of components.

Furthermore it is provided a structure that reduces and distributes the disturbances of the water currents that affects the turbine.

This is achieved with the present invention as defined in independent claim 1.

By utilizing an inclined carrying structure or apparatus according to the invention (instead of a structure placed vertically) several advantages are achieved.

One advantage is that the distance between the carrying structure and the turbine becomes larger. This reduces the disturbances in the water current substantially, and thereby also the dynamic effects. The negative effects on the turbine blade of the disturbed current configuration are increasing with increased distance from the root of the turbine. The solution with an inclined carrying structure is therefore particularly favourable because the distance between the carrying structure and the turbine blade increases proportionally with the distance from the root of the turbine blade. If the carrying structure includes circular pipes, the inclined positioning of the carrying foundation will give an oval cross section seen in a horizontal plane (the flowing plane of the water). The flow around an oval pipe is more favourable to reduce the disturbances in the current compared to the flow around a circular pipe.

The inclined positioning of the carrying structure allows elastic bending of the turbine blade without risking that the turbine blade comes in contact with the carrying structure. (In the wind turbine industry, this is a condition that must be particularly taken care of during the design of the turbine blades).

The carrying structure can be used for varying seabed conditions, and can for instance be based on gravity. Boxes or cases with ballast loads can in this case be separately installed on platforms with three foundations. The boxes may be made of a heavy material, but are preferably hollow and are filled with a ballast material during the installation. The internal distance between each box is chosen in relation to an expected load, such that the footprint of the foundation is sufficient to provide a desired stability. This kind of foundation is suitable for hard seabeds. If the seabed is soft, either suction anchors or pillars can be used for securing the foundation to the seabed. Alternatively the foundation may be secured to elements drifted into the seabed.

The carrying structure or foundation can include a cable gate for securing the transferral cable to avoid fatigue fractures due to the forces from the water current. '

The described components can be assembled as modules to ease installation and maintenance. During installation the housing with the turbine secured there to will normally represent one module, and a foundation one or several other modules. The advantages of the module structure, is considerably lower installation costs, the possibility for stepwise installation, and simpler decommissioning.

### Short description of the enclosed figures:

Fig. 1 is a side elevation of a foundation according to one embodiment of the invention;
Fig. 2 is a front elevation of the embodiment shown on fig. 1;
Fig. 3 is a top elevation of the foundation shown on fig. 1 and 2.

In the following the invention will be described with an exemplified embodiment.

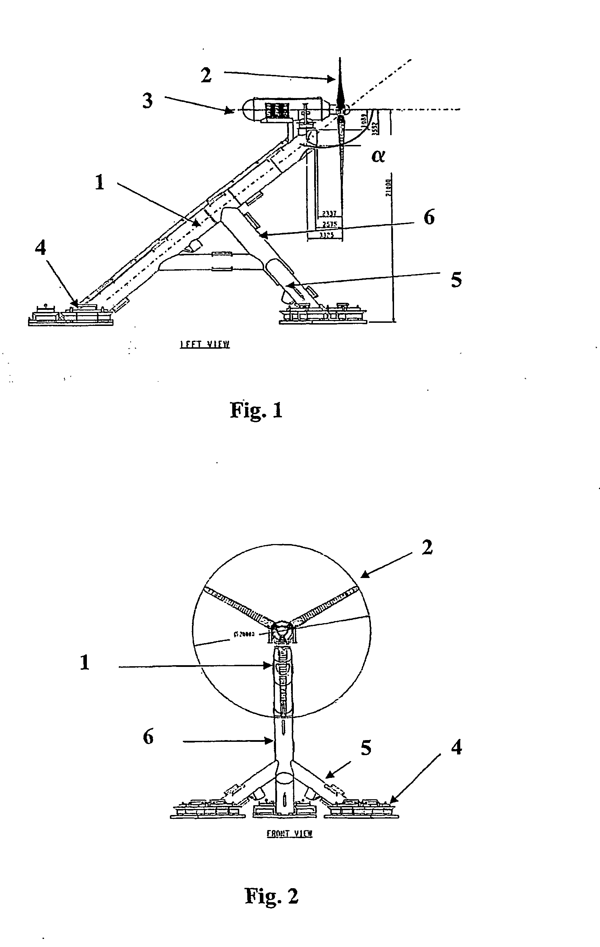

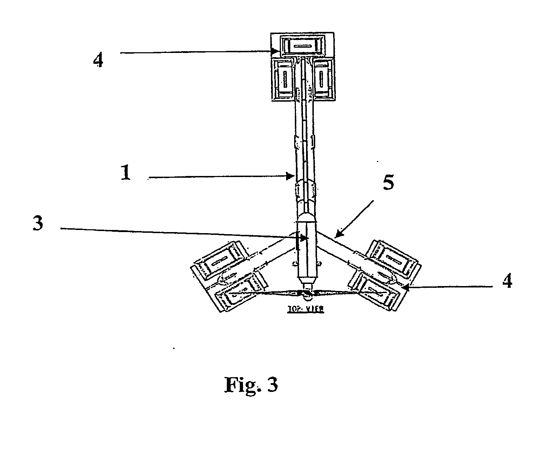

The figures 1, 2 and 3 show an apparatus according to one embodiment of the invention, seen from the side, from the front and from above respectively. The apparatus is designed for securing an axial turbine 2 to a seabed below flowing bodies of water, and to be lowered down to the seabed from vessel. The bed can be a seabed, an ocean bed, or a river bed and the flowing bodies of water can be a tidal current, a river current or an artificially generated current.

The axial turbine 2 includes propeller wings or turbine blades and is carried in a housing, nacelle, capsule or gondol 3 and is adapted to revolve about a first axis. The apparatus can be described as a carrying structure including a carrying pillar 1 that defines a second axis along its length. The carrying pillar has two ends and the housing 3 is adapted to be rigidly secured to one of the ends of the carrying pillar and the other end is adapted to be rigidly anchored to the seabed. The first axis and the second axis creates an inclined angle α therein between. The purpose of the inclined angle α is to give more favourable hydrodynamical conditions around the turbine, and to create a more rigid and steady structure for securing of the turbine 2 and the turbine housing 3. The angle α must be more than 90°, and may for instance be in an order of magnitude of 120° to 150°, preferably 135°. (When the angle is measured from the front of the center axis of the turbine and further down along the carrying pillar). The angle is adapted to give optimal hydrodynamical and mechanical conditions. The distance between the turbine 2 and the carrying pillar 1 is considerable and will ensure that the turbine blades do not come in contact with the carrying structure during extreme current conditions. When a carrying pillar 1 with a circular cross section is inclined in a water current as shown, the effective cross sectional profile will be oval, which is a favourable profile in an hydrodynamical respect and accordingly the disturbance of the body of water that flows through the turbine 2 is reduced.

The carrying pillar 1 is shown with a tubular cross section, and is manufactured of steel, aluminium, composit material or other suitable constructional materials. The cross section of the carrying pillar 1 may however also be oval, shaped as a drop, shaped as a wing profile or have any other cross section that gives favourable hydrodynamical conditions when it is placed at the angle of the carrying pillar.

The pillar 1 is connected to a support element or support tube 6 that again is connected to two supporting legs 5 to ensure a stable installation of the apparatus. The supporting pipe 6 is shown secured a substantially perpendicular to the pillar 1, but this angle can be of any favourable magnitude. The support tube 6 ensures good support of the carrying pillar 1 at the same time as the total area of the apparatus in a direction of flow is kept low such that the disturbance on the water masses in the area around the turbine is kept low. This can for instance be achieved in that the carrying pillar 1 is connected to the support element 6 with a center axis in the longitudinal direction of the support pillar 6 such that the center axis of the support pillar, the pivotal axis of the axial turbine and the axis of the carrying pillar are substantially in the same plane and are preferably aligned with the flow direction when the foundation is positioned. The foundation can however in some cases be positioned at an angle to optimise dynamical effects from the turbine, and to absorb the torque produced by the turbine.

The support pipe 6 is shown tubular, but can, as the carrying pillar, have any cross section. The cross section should however result in favourable rigidity and small hydrodynamical disturbances. The support legs 5 are showed placed at an angle in relation to each other, but could have been made simply as an element creating an "inverted T" with support pipe 6. The support pipe 6 may also be drifted into the seabed, or be stabilised in any other way.

The support pipe 6 is carried by the support legs 5 that are adapted to bare against, or in any other way be secured to, the seabed. In the shown embodiment, the support legs and the end of the carrying pillar is equipped with box shaped elements 4 or elements adapted to be filled with a ballast material, such as gravel, rocks or concrete. The boxes 4 can be made of a heavy material, but are preferably hollow and filled with the ballast material during installation.

The figures shows a lift induced propeller turbine 2 with turbine blades, and a housing 3 can form a module that is used to generate power from the flowing bodies of water. The module can be secured to an apparatus according to the invention. The blades have an adjustable pitch and can rotate at least 180° in connection with the change of the direction of flow and is secured to the housing 3, that preferably is a water tight capsule with equipment to transform the rotation of the turbine 2 to electric power, including a generator, gearing and a control system.

By allowing the turbine blades to rotate as described, the shown structure can be mounted in a locked position on the carrying structure 1 or the foundation (does not need to be rotated, as opposed to a wind mill).

An apparatus according to the invention carrying turbine 2 and the housing 3 may also include a cable gate that a transferral cable is secured to, to avoid fatigue fractures due to the forces from the flowing water. The transferral cable for the generated power leaves the electric generator through the water tight housing 3 and to a land based plant (not shown). The land based plant transform the generated power before it is phased onto an existing power grid.

In the description above, an anchoring for placement on a seabed is described. It is however nothing that excludes placing an apparatus with an inclined carrying pillar according of the invention, out from a rock wall or in any other fashion in flowing bodies of water from an artificial or naturally occurring surface adjacent the flowing bodies of water.

## Claims

1. Apparatus for extracting energy from flowing bodies of water, the apparatus comprising,
an axial turbine (2) and a support structure, where the axial turbine (2) includes turbine blades, is supported in a housing (3) and is adapted to revolve about a first axis, **characterized in that**
the support structure is adapted for anchoring the turbine (2) and the support structure completely submerged in flowing bodies of water, where the support structure includes a carrying pillar (1) with two ends, where one of the ends of the carrying pillar (1) is adapted to be rigidly secured to the housing (3), and the other end is adapted to be rigidly secured in relation to the flowing bodies of water, where the carrying pillar (1) defines a second axis along its length; the first axis and the second axis creates therein between an inclined angle α; and
the carrying pillar (1) is connected to a support element (6) with a central axis in the longitudinal direction of the support element (6) such that the central axis of the carrying pillar, the axis of the axial turbine and the axis of the carrying pillar are substantially in the same plane.

2. Apparatus according to claim 1, **characterized in that** the distance between carrying pillar (1) and the turbine blades increases proportionally with the distance from the root of the turbine blades.

3. Apparatus according to claim 1, **characterized in that** the support tube (6) is furthermore connected to two support legs (5) with two ends, where one end is connected to the support tube (6), and the other end of the support legs and the other end of the carrying pillar is adapted to be placed on a seabed.

4. Apparatus according to claim 3, **characterized in that** the end of the carrying pillar and the end of the support legs that is adapted for being placed on the seabed includes elements secured to these for carrying ballast.

5. Apparatus according to claim 2, **characterized in that** the end of the carrying pillar and the end of the support legs that is adapted for being placed on the seabed is secured to suction anchors.

6. Apparatus according to claim 3, **characterized in that** the end of the carrying pillar and the end of the support legs that are adapted for being placed on the seabed, is adapted for being secured to pillars drifted into the seabed.

7. Apparatus according to claim 1, **characterized in that** the internally inclined angle α is greater than 90°.

8. Apparatus according to claim 1, **characterized in that** the carrying pillar has a circular cross section.

## Revendications

1. Appareil pour extraire de l'énergie à partir de masses d'eau en circulation, l'appareil comprenant
une turbine axiale (2) et une structure de support, où la turbine axiale (2) comporte des aubes de turbine, est soutenue dans un logement (3) et est adaptée pour tourner autour d'un premier axe, **caractérisé en ce que** la structure de support est adaptée pour ancrer la turbine (2) et la structure de support totalement immergées dans des masses d'eau en circulation, où la structure de support comporte un pilier porteur (1) avec deux extrémités, où l'une des extrémités du pilier porteur (1) est adaptée pour être fixée rigidement au logement (3), et l'autre extrémité est adaptée pour être fixée rigidement relativement aux masses d'eau en circulation, où le pilier porteur (1) définit un second axe le long de sa longueur ;
le premier axe et le second axe créent entre eux un angle incliné α ; et
le pilier porteur (1) est rattaché à un élément de support (6) avec un axe central dans la direction longitudinale de l'élément de support (6) de telle sorte que l'axe central du pilier porteur, l'axe de la turbine axiale et l'axe du pilier porteur sont substantiellement dans le même plan.

2. Appareil selon la revendication 1, **caractérisé en ce que** la distance entre le pilier porteur (1) et les aubes de turbine augmente proportionnellement avec la distance depuis l'emplanture des aubes de turbine.

3. Appareil selon la revendication 1, **caractérisé en ce que** le tube de support (6) est en outre rattaché à deux pattes de support (5) avec deux extrémités, où une extrémité est rattachée au tube de support (6), et l'autre extrémité des pattes de support et l'autre extrémité du pilier porteur sont adaptées pour être placées sur un fond marin.

4. Appareil selon la revendication 3, **caractérisé en ce que** l'extrémité du pilier porteur et l'extrémité des pattes de support qui sont adaptées pour être placées sur le fond marin comportent des éléments fixés à celles-ci pour porter un lest.

5. Appareil selon la revendication 2, **caractérisé en ce que** l'extrémité du pilier porteur et l'extrémité des pattes de support qui sont adaptées pour être placées sur le fond marin sont fixées à des ancres à succion.

6. Appareil selon la revendication 3, **caractérisé en ce que** l'extrémité du pilier porteur et l'extrémité des pattes de support qui sont adaptées pour être placées sur le fond marin sont adaptées pour être fixées à des piliers à la dérive sur le fond marin.

7. Appareil selon la revendication 1, **caractérisé en ce que** l'angle incliné à l'intérieur α est supérieur à 90° .

8. Appareil selon la revendication 1, **caractérisé en ce que** le pilier porteur possède une section circulaire.

## Patentansprüche

1. Vorrichtung zum Extrahieren von Energie aus fließenden Gewässern, wobei die Vorrichtung aufweist:
eine Axialturbine (2) und eine Stützkonstruktion, wobei die Axialturbine (2) Turbinenschaufeln umfasst, in einem Gehäuse (3) gestützt ist und ausgelegt ist, um eine erste Achse zu drehen, **dadurch gekennzeichnet, dass**
die Stützkonstruktion zum Verankern der Turbine (2) ausgelegt ist und die Stützkonstruktion vollständig in fließende Gewässer eingetaucht ist, wobei die Stützstruktur einen Tragpfosten (1) mit zwei Enden umfasst, wobei eines der Enden des Tragpfostens (1) ausgelegt ist, um fest bzw. starr an dem Gehäuse (3) befestigt zu sein, und das andere Ende ausgelegt ist, um fest in Beziehung zu den fließenden Gewässern befestigt zu sein, wobei der Tragpfosten (1) eine zweite Achse entlang dessen Länge definiert, die erste Achse und die zweite Achse zwischen sich einen geneigten Winkel α erzeugen, und
der Tragpfosten (1) mit einem Stützelement (6) mit einer zentralen Achse in der longitudinalen Richtung des Stützelements (6) verbunden ist, so dass die zentrale Achse des Tragpfostens, die Achse der Axialturbine und die Achse des Tragpfostens im wesentlichen in derselben Ebene liegen.

2. Vorrichtung nach Anspruch 1, **dadurch gekennzeichnet, dass** der Abstand zwischen Tragpfosten (1) und den Turbinenschaufeln proportional zu dem Abstand von dem Grund bzw. der Wurzel der Turbinenschaufeln zunimmt.

3. Vorrichtung nach Anspruch 1, **dadurch gekennzeichnet, dass** das Stützrohr (6) weiterhin mit zwei Stützschenkeln (5) mit zwei Enden verbunden ist, wobei ein Ende mit dem Stützrohr (6) verbunden ist und das andere Ende der Stützschenkel und das andere Ende des Tragpfostens ausgelegt sind, um auf einem Meeresboden bzw. Gewässergrund plaziert zu werden.

4. Vorrichtung nach Anspruch 3, **dadurch gekennzeichnet, dass** das Ende des Tragpfostens und das Ende der Stützschenkel, das zum Plazieren auf dem Gewässergrund ausgelegt ist, Elemente umfassen, die an diesen zum Tragen eines Ballasts befestigt sind.

5. Vorrichtung nach Anspruch 2, **dadurch gekennzeichnet, dass** das Ende des Tragpfostens und das Ende der Stützschenkel, das zum Plazieren auf dem Gewässergrund ausgelegt ist, an Saugankern befestigt sind.

6. Vorrichtung nach Anspruch 3, **dadurch gekennzeichnet, dass** das Ende des Tragpfostens und das Ende der Stützschenkel, die zum Plazieren auf dem Gewässergrund ausgelegt sind, dazu ausgelegt sind, an Pfosten befestigt zu werden, die in den Gewässergrund getrieben sind.

7. Vorrichtung nach Anspruch 1, **dadurch gekennzeichnet, dass** der innen geneigte Winkel α größer als 90° ist.

8. Vorrichtung nach Anspruch 1, **dadurch gekennzeichnet, dass** der Tragpfosten einen kreisförmigen Querschnitt hat.
